# EUROPEAN PATENT SPECIFICATION

(11) **EP 2 632 963 B1**
(45) Date of publication and mention of the grant of the patent: **05.08.2015**
(21) Application number: 11772995.4
(22) Date of filing: 24.10.2011
(51) Int. Cl.: C08F 8/04, C08C 19/02, C08C 19/44, C08F 212/08, C10M 143/00, C10M 143/12, C08F 297/04, C08L 9/06, C08L 15/00, C08L 53/02, C08F 236/10

(54) **HYDROGENATED STYRENE-BUTADIENE COPOLYMERS AND PROCESS FOR THEIR PREPARATION**
HYDRIERTE STYROL-BUTADIEN-COPOLYMERE UND VERFAHREN ZU IHRER HERSTELLUNG
COPOLYMÈRES DE STYRÈNE-BUTADIÈNE HYDROGÉNÉS ET PROCÉDÉ POUR LEUR PRÉPARATION

(30) Priority: 25.10.2010 IT MI20101971
(43) Date of publication of application: 04.09.2013
(73) Proprietor: versalis S.p.A., 20097 San Donato Milanese (MI) (IT)
(72) Inventor: CAVALLO, Claudio, 47121 Florli' (FC) (IT); ZINNA, Marianna, 48124 Ravenna (RA) (IT); RIGHI, Sandra, 48122 Ravenna (RA) (IT)
(74) Representative: Mauro, Marina Eliana
(86) International application number: PCT/EP2011/068511
(87) International publication number: WO 2012/055802

(56) References cited:
- DE-A1- 19 724 914
- US-A- 4 156 673

## Description

### FIELD OF INVENTION

The present invention is directed to hydrogenated styrene-butadiene copolymers and to the process for their preparation. More specifically, the present invention is directed to hydrogenated styrene-butadiene copolymers having both random and block structure. The copolymers object of the present invention can be used in the preparation of viscosity index improver in lubricating oil compositions.

### BACKGROUND ART

Lubricating oil compositions for use in crankcase engine oils include base oils and additives that improve the performance and increase the effective life of the lubricant. Crankcase lubricating oil compositions can contain various polymer components that may be used to improve the viscometric performance of the engine oil.

Polymers are used as viscosity index improvers and often comprise copolymers of ethylene and propylene, among others. A challenge for oil formulators is to find polymers that may both improve high temperature viscosity performance as well as improve low temperature performance such as cold engine starting performance. These attributes, among others, can cause performance tradeoffs with respect to given polymer additives wherein an improvement in one way can be offset by reduced performance in another. Additionally, there is always a commercial incentive to have the polymer be effective at the lowest reasonable concentrations in order to minimize the cost of a given engine oil product or additive.

DE 197 24 914 and US 4,156,673 disclose viscosity index improvers comprising hydrogenated star-shaped polymer.

### SUMMARY OF INVENTION

Accordingly it is an object of the present invention to provide a hydrogenated styrene-butadiene star copolymer having good performances when added to a lubricating oil compositions. The present invention is disclosed in the appended claims, forming also integral part of the present specification.

The hydrogenated styrene-butadiene star copolymer, is formed from styrene and butadiene monomers in ratio of 3 to 25% styrene to 97 to 75% butadiene by weight. The degree of hydrogenation of the star polymer is at least 95%. Alternatively, the hydrogenated star polymer may have at least 98% degree of hydrogenation or, alternatively, at least 99% degree of hydrogenation. The ratio of styrene and butadiene monomers may be 5 to 20% styrene to 95 to 80% butadiene, or alternatively, 10% styrene and 90% butadiene.

The star polymer may be a hydrogenated, random styrene-butadiene copolymer or, alternatively, a hydrogenated styrene-butadiene block copolymer. The star polymer object of the present invention may be used, in one example, to prepare a viscosity index improver. A viscosity index improver is a mixture of a base oil and from 10 to 15% of the present hydrogenated styrene-butadiene star copolymer.

The viscosity index improver can be added to a lubricant, comprising one or more Group I, Group II, Group III or Group IV oil, in order to improve the mini-rotary viscometer value (MRV TP-1) of at least 5000 cP, generally of at least 8000 cP, over a lubricant modified with same amounts of a viscosity index improver containing a hydrogenated styreneisoprene star copolymer or an olefin copolymer diluted with the same base oil at approximately the same dilution level, at generally equivalent kinematic viscosity at 100°C.

A method of preparing a hydrogenated styrene-butadiene star copolymer is also described. The method includes the steps of supplying butadiene and styrene monomers to a substantially oxygen and moisture free reactor at a temperature of 30-70°C in an inert solvent. A lithium-based catalyst is added to the reactor. A modifier can be added to the reactor. The butadiene and styrene then are reacted to form an intermediate styrene-butadiene copolymer. The intermediate styrene-butadiene copolymer is then reacted in the presence of polyvalent coupling agent to form a styrene-butadiene star polymer. The star polymer is then hydrogenated in the presence of a second catalyst. The inert solvent is removed, e.g., by steam stripping, resulting in a solid polymer which is dried

### DETAILED DESCRIPTION OF THE INVENTION

The present invention is directed to a hydrogenated styrene-butadiene star copolymer. The ratio of styrene to butadiene with respect to the monomers used in the formation of the star copolymer is 3 to 25% styrene and 97 to 75 % of butadiene, alternatively 5 to 20% styrene and 95 to 80% butadiene. In one example, the styrene is 10% and butadiene 90% of the result of the components in the star copolymer. The present star copolymer is dissolved in a base oil at approximately 1 to 20 wt% of the star copolymer. The lubricant additive (viscosity index improver) is then ready for use in a fully formulated crankcase motor oil.

The star copolymer described herein includes styrene-butadiene copolymer arms bonded to a polyvalent coupling agent o core to form the multi-arm star copolymer. In one example, the coupling agent is a divinyl benzene core. In alternative, the coupling agent can be silicon o tin trichloride or tetrachloride.

Turning first to the styrene-butadiene arms, as referenced above, the relative ratio of styrene and butadiene monomers used in the formation of the arms of the star is 3 to 25% styrene and 97 to 75% butadiene, alternatively 5 to 20% styrene and 95 to 80% diene, and in one example, 10% styrene and 90% butadiene.

These polymer arms may be formed in different ways, or in different combinations of ways in which to create specific polymer arm structures. The polymer arm may have a random, tapered, or block architecture or combinations thereof. For instance, the reaction that creates the styrene-butadiene polymer may be completely random in that the styrene and butadiene monomers are all reacted together at the same time. The result is a random styrene-butadiene polymer where the monomers are randomly distributed in the polymer chain of the arms.

Alternatively, the styrene and butadiene may be joined together into a block copolymer format such that a multistep reaction is used. In each step, styrene or butadiene is sequentially joined to the arm of the preceding step to thereby form a block copolymer. In addition to the formation of straight random copolymers and block copolymers, it is possible to use a combination of reactions to form a partially random and partially block copolymer of styrene and butadiene.

There may also be formed a tapered copolymer where the arm is composed of, at one end, a relatively pure first monomer and, at the other end, a relatively pure second monomer. The middle of the arm is more of a gradient composition of the two monomers. The choice of a styrene-butadiene copolymer is favorable also for the cost, commercial availability, ease of handling, and other processing attributes. Alternatively, the specific type of styrene-butadiene copolymer may also depend on actual performance differences between the polymers as a result of later testing of the variously-formed styrene-butadiene polymer arms.

In one example, the polymer arms are prepared from anionic polymerization techniques. Initiators include, for example, hydrocarbyllithium initiators such as alkyllithium compounds (e.g., methyl lithium, n-butyl lithium, sec-butyl lithium), cycloalkyllithium compounds (e.g., cyclohexyl lithium) and aryl lithium compounds (e.g., phenyl lithium, 1-methylstyryl lithium, p-tolyl lithium, naphthyl lithium and 1,1-diphenyl-3-methylpentyl lithium). Also, useful initiators include naphthalene sodium, 1,4-disodium-1,1,4,4-tetraphenylbutane, diphenylmethyl potassium or diphenylmethyl sodium.

The above polymerization process is carried out in the absence of moisture and oxygen and in the presence of at least one inert solvent. In one embodiment, anionic polymerization is conducted in the absence of any impurity which is detrimental to an anionic catalyst system. The inert solvent includes a hydrocarbon, an aromatic solvent or ether. Suitable solvents include isobutane, pentane, cyclopentane, n-hexane, cyclohexane, benzene, toluene, xylene, tetrahydrofuran, diglyme, tetraglyme, orthoterphenyl, biphenyl, decalin or tetralin.

In a further embodiment, the anionic polymerization is conducted in the presence of Lewis base modifying agents, in particulars ethers and amines. Suitable modifying agents includes ethylene glycol dimethyl or diethyl or dibutyl ether, diethylene glycol dimethyl or diethyl or dibutyl ether, triethylene glycol dimethyl or diethyl ether, tetrahydrofuran, 2-methoxy ethyl tetrahydrofuran, 2-methoxy methyl tetrahydrofuran, 2,5-dimethoxy methyl tetrahydrofuran, dioxane, preferably 2-methoxy ethyl tetra-hydrofuran (THFA-ethyl) modifier in accordance with the European Patent Application EP1.829.906.

The copolymer with radial or star architecture object of the present invention typically contains polymeric arms that may be chemically bonded to a core portion. The core portion may be a polyvalent coupling agent such as a polyvalent divinyl non-acrylic monomer, oligomer, polymer, or copolymer thereof, or silicon or tin tetrachloride. In one embodiment the polyvalent divinyl non-acrylic monomer is divinyl benzene.

The amount of polyvalent coupling agent may be an amount suitable to provide coupling of copolymer previously prepared as arms onto a core comprising the coupling agent in monomeric, oligomeric or polymeric form, to provide a star polymer. As described above, suitable amounts may be determined readily by the person skilled in the art with minimal experimentation, even though several variables may be involved. For example, if an excessive amount of coupling agent is employed, or if excessive unreacted monomer from the formation of the polymeric arms remains in the system, crosslinking rather than star formation may occur. Typically the mole ratio of polymer arms to coupling agent may be 50:1 to 1:1, or 30:1 to 2:1, or 20:1 to 4:1, or about 15:1 to 10:1. The desired ratio may also be adjusted to take into account the length of the arms, longer arms sometimes tolerating or requiring more coupling agent than shorter arms. Typically, the copolymer so prepared is soluble in an oil of lubricating viscosity.

In one embodiment, the polymeric arms of the copolymer have a polydispersity of 2 or less, or 1.7 or less, or 1.5 or less, for instance, from 1 to 1.4 as measured before radial or star copolymer formation or on uncoupled units. The overall composition, containing copolymers with the radial or star architecture of the present invention, may thus also have uncoupled polymeric arms still present (also referred to as a polymer chain or linear copolymer) the percentage conversion of a polymer chain to radial or star copolymer may be at least 50%, for instance at least 70%, at least 75% or at least 80%. In one embodiment, the conversion of polymer chain to radial or star copolymer may be 90%, 95% or about 100%.

In one embodiment, a portion of the polymer chains does not form a star copolymer and remains as a linear polymer. In one embodiment, the copolymer is a mixture of (i) a copolymer with radial or star architecture, and (ii) linear polymer chains (also referred to as uncoupled polymeric arms). In different embodiments, the amount of radial or star architecture within the copolymer composition may be from 10wt% to 85wt%, preferably from 25wt% to 70wt%, of the amount of copolymer. In different embodiments the linear polymer chains may be present from 15wt% to 90wt%, preferably from 30wt% to 75wt%, of the amount of the overall polymer composition.

The copolymer with radial or star architecture may have 3 or more arms, or 5 or more arms, or 7 or more arms, or 10 or more arms. In other embodiments, there may be 12 or more arms, or 20 or more arms. Generally, the number of arms ranges from 3 to 30, preferably from 4 to 20.

The average molecular weight M_{w} of the final star copolymer depends on the size and average number of arms on each molecule. In one example, the average molecular weight of the star molecule (determined by GPC/UV) is greater than 250,000, alternatively greater than 270,000, and still further greater than 300,000 up to, e.g., 700,000. The average molecular weight M_{w} of each arm on these star molecules (GPC/UV) is more than 30,000, alternatively more than 35,000, and still further alternatively more than 45,000 up to, e.g., 90,000.

Molecular weight of the polymer was measured by Gel Permeation Chromatography using PLGEL columns 10e5-10e5-10e4-10e3-10e6-500, Pump Agilent 1050, UV Detector at wavelenght 254 nm, Solvent/Eluent THF flow 1 ml/min, T 25°C, injection volume 250 micro-liter, Standard Polystyrene Calibration, Calibration Universal Method.

The number of arms in the star polymer is estimated by GPC-MALLS method using PLGEL columns 10e5-10e5-10e4-10e3-10e6-500, Pump Agilent 1050, Detector DRI Agilent 1047 A, Detector MALLS DAWN DSP wavelenght 632 nm, dn/dc 0.138-0.141ml/g (parent polymer), dn/dc 0.095-0.097 ml/g (hydrogenated polymer), Solvent/Eluent THF, flow 1 ml/min, T 25°C.

The present star copolymer is a hydrogenated molecule. The degree of hydrogenation is greater than 95%, alternatively greater than 98%, and still further alternatively greater than about 99%. In the following examples, a titanium catalyst is used in the hydrogenation of the copolymer. Preferably, the hydrogenation step is carried out in accordance with the procedure disclosed in the European Patent Application EP 914,867 and European Patent Application EP 816,382.

In formulating a viscosity index improver, the star copolymer described herein is added to a base oil of lubricating viscosity (diluent) to form the lubricant additive. Oils of lubricating viscosity useful as the diluents of the present invention may be selected from natural lubricating oils, synthetic lubricating oils and mixtures thereof.

Natural oils include animal oils and vegetable oils (e.g., castor oil, lard oil); liquid petroleum oils and hydro-refined, solvent-treated or acid-treated mineral oils or the paraffinic naphthenic and mixed paraffinic-naphthenic types. Oils of lubricating viscosity derived from coal or shale also serve as useful base oils.

Synthetic lubricating oils include hydrocarbon oils and halo-substituted hydrocarbon oils such as polymerized and interpolymerized olefins; alkylbenzenes; polyphenyls; and alkylated diphenyl ethers and alkylated diphenyl sulfides and derivative, analogs and homologs thereof.

Alkylene oxide polymers, and interpolymers and derivatives thereof where the terminal hydroxyl groups have been modified by esterification, etherification, etc., constitute another class of known synthetic lubricating oil.

Another suitable class of synthetic lubricating oils comprises the esters of dicarboxylic acids with a variety of alcohols (e.g., butyl alcohol, hexyl alcohol, dodecyl alcohol, 2-ethylhexyl alcohol, ethylene glycol, diethylene glycol monoether, propylene glycol).

The diluent oil may comprise a Group I, Group II, Group II, Group IV or Group V oil or blends of the aforementioned oils. The diluent oil may also comprise a blend of one or more Group I oils and one or more of Group II, Group III, Group IV or Group V oils. Preferably, from an economic standpoint, the diluent oil is a mixture of a Group I oil and one or more a Group II, Group III, Group IV or Group V oil, more preferably a mixture of a Group I oil and one or more Group II or Group III oil.

Definitions for the oils as used herein are the same as those found in the American Petroleum Institute (API) publication "Engine Oil Licensing and Certification System", Industry Services Department, Fourteenth Edition, December 1996, Addendum 1, December 1998.

The star polymer is added to the base oil to form a viscosity index improver in a ratio of 1-20wt%, alternatively 10-15wt%, or still further alternatively about 12wt%.

Ultimately, the viscosity index improver will be used in connection with a fully formulated lubricant composition. The amount of lubricant additive that is used in the fully formulated lubricant composition is sufficient to provide about 0.1 to 5wt% of star polymer in the fully formulated lubricant composition. Alternatively, about 0.3 to 2 wt%, or still further alternatively approximately 0.5 to 1.5 wt% of the fully formulated lubricant.

It is possible and even desirable to include other types of additives in a fully formulated lubricant composition. These other additives may include detergents, dispersants, viscosity modifiers, friction modifiers, metal deactivators, dispersant viscosity modifiers, extreme pressure agents, antiwear agents, antioxidants, corrosion inhibitors, foam inhibitors, emulsifiers, pour point depressants, seal swelling agents and mixtures thereof. These other lubricant additives may be combined in varying amounts relative to each other.

### EXAMPLE 1 (Random Styrene-Butadiene Star Polymer)

The following process was used to create one example of a styrene/butadiene star polymer and incorporate it into a base oil to form a lubricant additive. In this example there is a completely random polymerization of styrene and butadiene monomers.
a. Butadiene (∼90%) and styrene (∼10%) were co-polymerized in a clean, oxygen and moisture free reactor at about 10% concentration and 30-70°C in a cyclohexane solvent using n-butyl lithium as the catalyst, in the presence of tetrahydrofurane as a modifier to control the amount of 1,2 vs 1,4 polymerization of butadiene. The polymerization is completed in about 20 minutes. Next, divinyl benzene is added to the reactor in order to couple the polymers into a star structure. This takes about 60 minutes. Finally, tert-butanol is added to the reactants to neutralize any remaining active centers so that no further chain growth can take place.
b. The star polymer solution is then hydrogenated using a titanium catalyst at 120°C, wherein a degree of hydrogenation higher than 99% is achieved.
c. The hydrogenated styrene-co-butadiene star polymer is then recovered from the solution through a series of steam stripping, extrusion and drying steps.

The foregoing process may be varied in many respects. The solvent into which the butadiene and styrene are polymerized is a cyclohexane solvent, but other inert solvents noted earlier herein are acceptable and may be used. Also the catalyst in this polymerization reaction is n-butyl lithium. Other lithium-based catalysts may be used. Also noted is the use of tetrahydrofurane as a modifier to control the amount of 1, 2 versus 1, 4 polymerization of butadiene. Other ether-based modifiers may likewise be used. The amount of 1, 2 polymerization of butadiene constitutes more than 50%, alternatively more than 53%, and still further alternatively more than 54% of the final polymer.

The hydrogenated styrene-butadiene random copolymers formed herein were used as Product Examples R-1 and R-2 in Table 1. The dried hydrogenated styrene-co-butadiene star polymer is dissolved in base oil at approximately 12 wt% polymer, by heating the solution to 120-150°C under a nitrogen atmosphere for 4-8 hours.

### EXAMPLE 2 (Styrene-Butadiene Block Copolymer Star Polymer)

The following process was used to create one example of a styrene/butadiene star polymer and incorporate it into a base oil to form a lubricant additive. In this example, a star shaped block copolymer of styrene and butadiene is formed.
a. Styrene (∼10%) was polymerized in a clean, oxygen and moisture free reactor at about 10% concentration and 30-70°C in a cyclohexane solvent using n-butyl lithium as the catalyst; after about 20 minutes, butadiene (∼90%) is added to the reactor, in the presence of tetrahydrofurane as a modifier to control the amount of 1,2 vs 1,4 polymerization of butadiene. Further polymerization is completed in about 20 minutes. Next, divinyl benzene is added to the reactor in order to couple the polymers into a star structure. This takes about 60 minutes. Finally, tert-butanol is added to the reactants to neutralize any remaining active centers so that no further chain growth can take place.
b. The star polymer solution is then hydrogenated using a titanium catalyst at 120°C, wherein a 99+% degree of hydrogenation is achieved.
c. The hydrogenated styrene-butadiene block star polymer is then recovered from the solution through a series of steam stripping, extrusion and drying steps.

The foregoing process may be varied in many respects. The solvent into which the butadiene and styrene are polymerized is a cyclohexane solvent, but other inert solvents noted earlier herein are acceptable and may be used. Also the catalyst in this polymerization reaction is n-butyl lithium. Other lithium-based catalysts may be used. Also noted is the use of tetrahydrofurane as a modifier to control the amount of 1, 2 versus 1, 4 polymerization of butadiene. This is a significant aspect of the reaction process. The amount of 1, 2 polymerization of butadiene constitutes more than 50%, alternatively more than 53%, and still further alternatively more than 54% of the final polymer. If there is less than 50% of the 1, 2 butadiene polymer, then a crystalline polymer forms that is undesirable. Also above, the use of a titanium catalyst to achieve hydrogenation is useful. The titanium catalyst can simply be left in the end polymer and does not need to be removed.

The hydrogenated styrene-butadiene block copolymers formed herein were used as Product Examples B-1 and B-2 in Table 1. The dried hydrogenated styrene-co-butadiene block star polymer is dissolved in base oil at approximately 12 wt% polymer, by heating the solution to 120-150C under a nitrogen atmosphere for 4-8 hours.

### LUBRICATING ADDITIVE AND FORMULATED LUBRICANT OIL

### EXAMPLES

The foregoing polymers were used to formulate lubricant additive samples that were compared with commercially available benchmark products. The benchmark products are ShellVis 261 (SV-261) and Lubrizol Lz7077 (Lz7077). The following Table 1 is a description of the physical characteristics and performance attributes of the benchmarks versus the lubricant additives and fully formulated lubricant oil compositions as described herein.

**TABLE 1**

| **Product** | **SV-261** | **Lz 7077** | **Example R-1** | **Example R-2** | **Example B-1** | **Example B-2** |
|---|---|---|---|---|---|---|
| **Description** | **Star Polymer, Hydrogenated StyreneIsoprene Block Copolymer** | **Linear Polymer, EthylenePropylene Random Copolymer** | **Star Polymer, Hydrogenated Styrene-Butadiene Random Copolymer** | **Star Polymer, Hydrogenated Styrene-Butadiene Random Copolymer** | **Star Polymer, Hydrogenated Styrene-Butadiene Block Copolymer** | **Star Polymer, Hydrogenated Styrene-Butadiene Block Copolymer** |
| | | | | | | |

| **Polymer Structure** | | | | | | |
|---|---|---|---|---|---|---|
| Vinyl 1,2 | NA | NA | 53 | 55,7 | 51 | 54 |
| Hydrogenation % | 99 | NA | 99 | 99 | 98 | 99 |
| Styrene % Wt | 7 | NA | 8,5 | 10,7 | 7,6 | 11,0 |
| | | | | | | |

| **Polymer Properties** (1) | | | | | | |
|---|---|---|---|---|---|---|
| Mw*10³, Daltons (2) | 313(980) | 160 | 359 (1080) | 369 (1060) | 346 (930) | 338 (870) |
| Mn*10³, Daltons | 223 | 94 | 262 | 281 | 258 | 279 |
| Mw*10³ arm parent, Daltons (3) | 51,0 | NA | 49,2 | 51,0 | 44,7 | 45,1 |
| Mp *10³ star, Daltons (2) | (900) | NA | (870) | (960) | (872) | (870) |
| Mw/Mn | 1,41 | 1,70 | 1,37 | 1,31 | 1,34 | 1,21 |
| Arms number F (4) | 18 | NA | 17,4 | 16,8 | 18 | 17 |
| | | | | | | |

| **VI improver Concentrate Composition and Properties** | | | | | | |
|---|---|---|---|---|---|---|
| Active Polymer % Wt | 11,6 | 12,4 | 12 | 12 | 12 | 12 |
| Base Oil (Group I), % Wt | 88,4 | 87,6 | 88 | 88 | 88 | 88 |
| | | | | | | |
| Kinematic Viscosity, cSt a 100°C | 1463 | 1167 | 1325 | 1256 | 1104 | 805 |
| Thickening Power, % Wt Polymer | 6,22 | 4,15 | 5,93 | 5,86 | 5,32 | 4,72 |
| Shear Stability Index, % TP Loss | 27 | 23 | 26 | 27 | 13,4 | 11,4 |
| | | | | | | |

| **10W40 Oil Composition and Properties** | | | | | | |
|---|---|---|---|---|---|---|
| DI, % | 11.6 | 11,6 | 11,6 | 11,6 | 11,6 | 11,6 |
| VI Improver Concentrate, % | 8,87 | 10,9 | 9,13 | 9,19 | 9,59 | 10,33 |
| Pour Point Depressant, % | 0,20 | 0,20 | 0,20 | 0,20 | 0,20 | 0,20 |
| 150N Base Oil, % | 48,57 | 47,30 | 48,41 | 48,37 | 48,13 | 47,67 |
| 100N base Oil, % | 30,76 | 30,00 | 30,66 | 30,64 | 30.49 | 20,20 |
| Total | 100 | 100 | 100 | 100 | 100 | 100 |
| | | | | | | |
| Kinematic Viscosity, cSt a 100°C | 14,37 | 14,37 | 14,36 | 14,42 | 14,43 | 14,42 |
| CCS at -25°C, cP | 5574 | 6592 | 5315 | 5214 | 5880 | 5738 |
| MRV TP-1 at -30°C, cP | 39658 | 36682 | 25490 | 24612 | 27968 | 28465 |
| MRV Yield Stress, gms | 0 | 0 | 0 | 0 | 0 | 0 |
| Gelation Index, D5133G | 4,5 | 6,6 | 5,2 | 4,8 | 10,50 | 5,30 |
| TBS at 150°C, cP | 3,65 | 4,00 | 3,88 | 3,69 | 3,72 | 3,77 |

| | | | | | | |
|---|---|---|---|---|---|---|
| (1) Values are obtained by GPC/UV (2) Values in brackets are obtained by GPC/MALLS/RI instrument. (3) Values referred to product before hydrogenation (4) F is calculated as : Mp star /Mw arm | | | | | | |

The foregoing Table 1 reports the advantageous viscometric properties seen as a result of using the styrene-butadiene star polymer of the present invention in a Viscosity Index improver composition and a formulated 10W40 oil composition. The viscometric properties include low temperature properties such as the Cold Crank Simulator test (CCS) (ASTM D-5293) and Mini-Rotary Viscometer test (MRV) (ASTM D-4684). High temperature properties include thickening performance upon addition of the polymer and shear stability index (SSI) (ASTM D-6278).

## Claims

1. A hydrogenated styrene butadiene star copolymer, wherein the star copolymer is formed from a plurality of arms bonded to a central core and wherein each arm is made from styrene and butadiene monomers in a ratio of 3 to 25% styrene to 97 to 75% butadiene by weight wherein the degree of hydrogenation of the star polymer is at least 95%, and the amount of 1,2-polymerisation of butadiene constitutes more than 50% of the final polymer.

2. The copolymer of claim 1, wherein the hydrogenated star copolymer has a 98% degree of hydrogenation.

3. The copolymer of claim 1, wherein the star copolymer has an average molecular weight (Mw) of at least 250,000.

4. The copolymer of claim 1, wherein the ratio of styrene and butadiene monomers is 5 to 20% styrene to 95 to 80% butadiene.

5. The copolymer of claim 1, wherein the ratio of styrene and butadiene monomers is 10% styrene and 90% butadiene.

6. The copolymer of claim 1 comprising a number of arms ranging from 3 to 30.

7. The copolymer of claim 1, wherein each arm comprises a hydrogenated, random styrene-butadiene copolymer.

8. The copolymer of claim 1, wherein each arm comprises a hydrogenated, styrene-butadiene block copolymer.

9. The copolymer of claim 1, wherein each arm has an average molecular weight (Mw) higher than 30.000.

## Patentansprüche

1. Ein hydriertes Styrol-Butadien-Sterncopolymer, wobei das Sterncopolymer aus einer Vielzahl von Armen, die an einen zentralen Kern gebunden sind, gebildet ist und wobei jeder Arm aus Styrol- und Butadienmonomeren in einem Verhältnis von 3 bis 25 Gew.-% Styrol zu 97 bis 75 Gew.-% Butadien gefertigt ist, wobei der Hydrierungsgrad des Sternpolymers mindestens 95 % beträgt und die Menge der 1,2-Polymerisation von Butadien mehr als 50 % des endgültigen Polymers ausmacht.

2. Copolymer gemäß Anspruch 1, wobei das hydrierte Sterncopolymer einen Hydrierungsgrad von 98 % aufweist.

3. Copolymer gemäß Anspruch 1, wobei das Sterncopolymer ein durchschnittliches Molekulargewicht (Mw) von mindestens 250 000 aufweist.

4. Copolymer gemäß Anspruch 1, wobei das Verhältnis von Styrol- und Butadienmonomeren 5 bis 20 % Styrol zu 95 bis 80 % Butadien beträgt.

5. Copolymer gemäß Anspruch 1, wobei das Verhältnis von Styrol- und Butadienmonomeren 10 % Styrol und 90 % Butadien beträgt.

6. Copolymer gemäß Anspruch 1, das eine Anzahl von Armen beinhaltet, die im Bereich von 3 bis 30 liegt.

7. Copolymer gemäß Anspruch 1, wobei jeder Arm ein hydriertes statistisches Styrol-Butadien-Copolymer beinhaltet.

8. Copolymer gemäß Anspruch 1, wobei jeder Arm ein hydriertes Styrol-Butadien-Blockcopolymer beinhaltet.

9. Copolymer gemäß Anspruch 1, wobei jeder Arm ein durchschnittliches Molekulargewicht (Mw) von mehr als 30 000 aufweist.

## Revendications

1. Un copolymère en étoile de styrène et de butadiène hydrogéné, le copolymère en étoile étant formé à partir d'une pluralité de bras liés à un noyau central et chaque bras étant réalisé à partir de monomères de styrène et de butadiène dans un rapport de 3 à 25 % de styrène à 97 à 75 % de butadiène en poids, le degré d'hydrogénation du polymère en étoile étant d'au moins 95 %, et la quantité de 1,2-polymérisation de butadiène constituant plus de 50 % du polymère final.

2. Le copolymère de la revendication 1, le copolymère en étoile hydrogéné ayant un degré d'hydrogénation de 98 %.

3. Le copolymère de la revendication 1, le copolymère en étoile ayant une masse moléculaire moyenne (Mw) d'au moins 250 000.

4. Le copolymère de la revendication 1, dans lequel le rapport de monomères de styrène et de butadiène est de 5 à 20 % de styrène à 95 à 80 % de butadiène.

5. Le copolymère de la revendication 1, dans lequel le rapport de monomères de styrène et de butadiène est de 10 % de styrène et de 90 % de butadiène.

6. Le copolymère de la revendication 1 comprenant des bras dont le nombre est compris dans la gamme allant de 3 à 30.

7. Le copolymère de la revendication 1, dans lequel chaque bras comprend un copolymère de styrène-butadiène aléatoire hydrogéné.

8. Le copolymère de la revendication 1, dans lequel chaque bras comprend un copolymère séquencé de styrène-butadiène hydrogéné.

9. Le copolymère de la revendication 1, dans lequel chaque bras a une masse moléculaire moyenne (Mw) supérieure à 30 000.
